Europäisches Patentamt

European Patent Office

Office européen des brevets

(19)

(11) Veröffentlichungsnummer: **0 301 201**
**B1**

(12) **EUROPÄISCHE PATENTSCHRIFT**

(45) Veröffentlichungstag der Patentschrift:
16.08.90

(51) Int. Cl.⁵: **B05C 17/00**

(21) Anmeldenummer: 88108751.4

(22) Anmeldetag: 01.06.88

(54) Handgeführtes, motorisch angetriebenes Elektrowerkzeug.

(30) Priorität: 16.07.87 DE 3723517

(43) Veröffentlichungstag der Anmeldung:
01.02.89 Patentblatt 89/5

(45) Bekanntmachung des Hinweises auf die Patenterteilung:
16.08.90 Patentblatt 90/33

(84) Benannte Vertragsstaaten:
AT BE CH DE ES FR GB GR IT LI LU NL SE

(56) Entgegenhaltungen:
DE-A- 2 537 022
DE-A- 3 418 052
DE-A- 3 418 630
DE-A- 3 535 229
FR-A- 2 424 856

(73) Patentinhaber: Licentia Patent-Verwaltungs-GmbH,
Theodor-Stern-Kai 1, D-6000 Frankfurt/Main 70(DE)

(72) Erfinder: Taschke, Franz, Dipl.-Ing., Wildgansweg 24,
D-7000 Stuttgart 50(DE)
Erfinder: Geis, Wilhelm, Dipl.-Ing. (FH), Mühlefeld 8,
D-7057 Leutenbach(DE)
Erfinder: Stämmele, Siegfried, Ing. grad.,
Brucknerstrasse 3, D-7057 Leutenbach(DE)

(74) Vertreter: Wolf, Otto, Dr. Ing. et al, Licentia
Patent-Verwaltungs-GmbH Theodor-Stern-Kai 1,
D-6000 Frankfurt 70(DE)

## Beschreibung

Die Erfindung bezieht sich auf ein Elektrowerkzeug gemäß dem Oberbegriff des Anspruchs 1.

Durch das DE-GM 84 35 167 ist eine Einrichtung zum Entfernen von Kartuschen bekannt, die in einer an einem gemeinsamen Traggehäuse angeordneten Kartuschenhaltevorrichtung gehalten sind. Der Kolben jeder Kartusche wird dabei von einer Stange verschoben, und die Stangen werden durch einen Elektromotor angetrieben. Zu diesem Zweck ist der Elektromotor über ein Gewinde-Mutter-Getriebe mit den je einem Kolben einer Kartusche zugeordneten Stangen zur Durchführung einer Schiebebewegung verbunden. Am unteren Ende der Kartuschenhaltevorrichtung ist eine diese übergreifende Mischereinheit mit einem jeder Kartusche zugeordneten Eingang angebracht. Die Eingänge münden dabei in einen gemeinsamen Ausgang, an den sich ein Mixer mit einer Austrittsdüse anschließt.

Eine derartige Einrichtung weist den Nachteil auf, daß es sich bei dem Mixer um einen statischen Mixer handelt. Ein solcher Mixer erfordert einerseits einen erheblichen Anpreßdruck auf die durch ihn hindurchzupressenden Substanzen und andererseits eine nur unvollkommene Durchmischung der Substanzen. Des weiteren ist hierbei wegen der verhältnismäßig langen Durchlaufzeit der Substanzen durch den Mixer, insbesondere wenn sich diese rasch verfestigen, die Gefahr einer Betriebsstörung und/oder Beschädigung der Einrichtung groß, zumal keinerlei Sicherheitsvorrichtungen gegen Überlastungen getroffen sind. Schließlich dauert es hier relativ lange, bis die Anpreßkolben bzw. deren Stangen in die Ausgangsposition zurückgelangen.

Der Erfindung liegt die Aufgabe zugrunde, ein Elektrowerkzeug der gattungsgemäßen Art zu schaffen, das es ermöglicht, zwei oder mehr Substanzen bzw. Komponenten von unterschiedlicher chemischer Beschaffenheit vergleichsweise rascher, intensiver, betriebssicherer und mit einem Geringstmaß an Aufwand miteinander zu vermischen (z.B. bei der Ausführung von Verklebungen mit Zwei- oder Mehrkomponentenklebern).

Weiterbildungen und zweckmäßige Ausgestaltungen der Erfindung sind in den Unteransprüchen angegeben.

Die Erfindung wird im nachstehenden anhand der Zeichnung, die ein Ausführungsbeispiel schematisch veranschaulicht, erläutert.

Es zeigen:

Fig. 1 einen Teillängsschnitt durch das Elektrowerkzeug mit einer Mischeinrichtung für 2 Komponenten,

Fig. 2 eine Draufsicht auf die Dosier- und Mischeinrichtung,

Fig. 3 eine Ansicht entlang des Schnittes A-B durch Fig. 1,

Fig. 4 eine Seitenansicht der Getriebeeinheit, wobei die Getriebeelemente der besseren Übersicht halber in einer Ebene liegend dargestellt sind,

Fig. 5 eine Ansicht des Elektrowerkzeugs gemäß Fig. 1 in Richtung C.

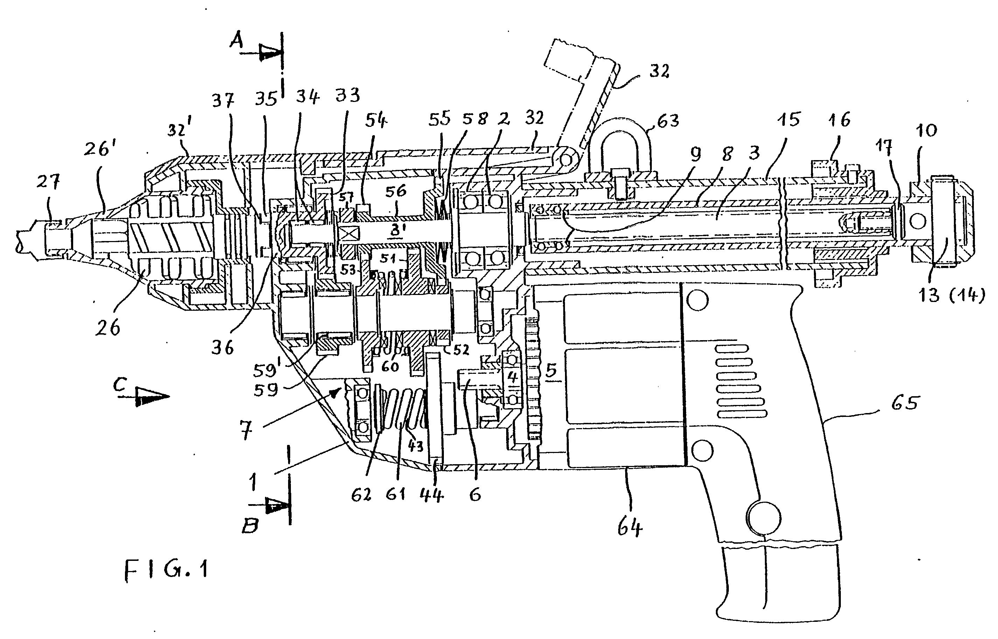

Wie aus Figur 1 ersichtlich ist, wird die im Getriebegehäuse 1 mittels eines Doppel-Kugellagers 2 drehbar gelagerte, stationäre Gewindespindel 3 durch das an der Ankerwelle 4 des Antriebsmotors 5 angebrachte Ritzel 6 über ein Zahnradpaar 55,52' angetrieben, das Bestandteil einer Getriebeeinheit 7 ist, die an anderer Stelle näher erläutert wird. Die Gewindespindel 3 ist in einem als Vierkant-Hohlprofil ausgebildeten Schlittenteil 8 untergebracht, das im Bereich seines getriebeseitig liegenden Endes eine Spindelmutter 9 enthält, die fest im Inneren des Schlittenteils angebracht ist. Am anderen Ende des Schlittenteils 8 ist ein Träger 10 befestigt, in welchem die rückwärtigen Enden zweier räumlich nebeneinander liegender Ausstoßkolbenstangen 11, 12 (siehe Fig . 2) gelagert sind, und zwar zweckmäßigerweise mittels Gelenkköpfe 13, 14, um eine gewisse Beweglichkeit der Ausstoßkolbenstangen zu gewährleisten.

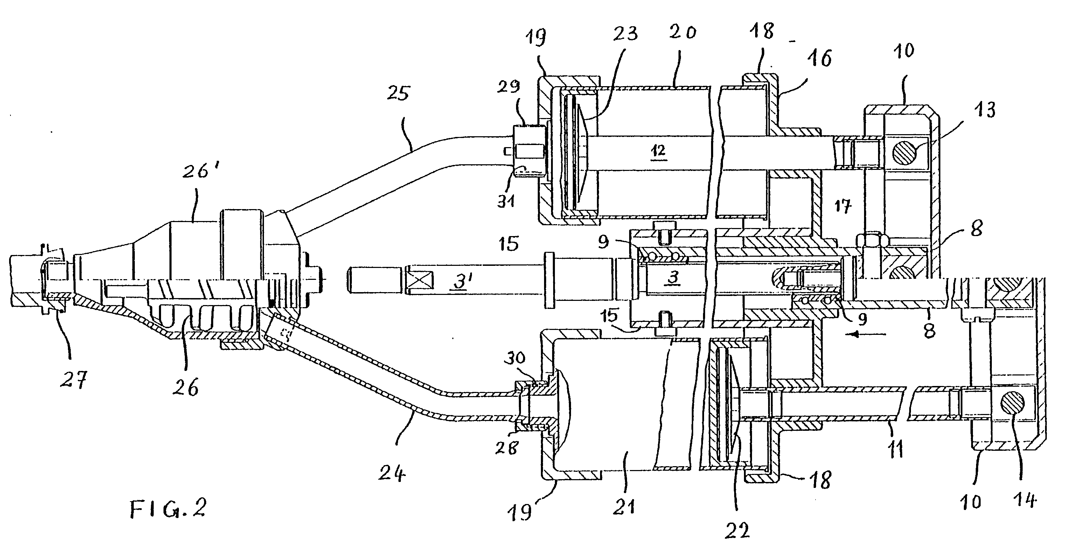

Das durch die Gewindespindel 3 über die Spindelmutter 9 in eine Axialbewegung versetzbare Schlittenteil 8 befindet sich im Inneren eines aus einem Vierkant-Hohlprofil gebildeten Längsholms 15, an dem, wie auch Fig. 2 zeigt, eine Führung 16 für die beiden Ausstoßkolbenstangen 11, 12 sowie für das Schlittenteil 8 angebracht ist. Der Längsholm 15 ist mittels Schrauben am Getriebegehäuse 1 befestigt. In die rückwärtige Stirnseite der Gewindespindel 3 ist ein Anschlag 17 eingeschraubt, an dem der Träger 10 in der vorderen Endlage des Schlittenteils 8 zur Anlage kommt.

Aus Figur 2 ist des weiteren erkennbar, daß die Führung 16 Aufnahmetaschen 18, 19 für zwei Kartuschen 20, 21 abgrenzt, welche die miteinander zu mischenden Komponenten, zum Beispiel die eines Zweikomponentenklebers, enthalten. In jede der beiden Kartuschen greift ein Ausstoßkolben 22, 23 der jeweils zugehörigen Ausstoßkolbenstangen ein und drückt bei Betätigung der Einrichtung den Inhalt der Kartusche über eine dieser zugeordnete Zuleitung 24, 25 in einen geeignet ausgebildeten Mischer 26 hinein, an dem eine Austrittsdüse 27 angebracht ist. Der Mischerkopf 26' mit dem Mischer 26 und die Zuleitungen 24, 25 zu den Kartuschen bilden zweckmäßigerweise eine abnehmbare Einheit, die gegebenenfalls eine Wegwerfeinheit ist. Bestandteil dieser Einheit können auch die Kartuschen 21 und 22 sein. Die kartuschenseitig liegenden Anschlüsse der Mischerkopfzuleitungen 24 und 25 sind mit Überwurfmuttern 28 und 29 versehen, die auf die Gewindestutzen 30, 31 der Kartuschen aufschraubbar sind. Um eine Verwechslung der beiden Kartuschen auszuschließen, weisen die Überwurfmuttern 28 und 29 Gewinde mit entgegengesetzter Steigung auf, also einmal ein Rechts- und das anderemal ein Linksgewinde. Dementsprechend sind die Gewinde der Gewindestutzen 30 und 31 an den Kartuschen einmal rechtsgängig und einmal linksgängig. Zusätzlich kann auch noch eine Unterscheidung durch Verschiedenfarbigkeit der Anschlüsse getroffen sein.

Die beiden Kartuschen 20 und 21 sind, mittels eines am Getriebegehäuse verschwenkbar gelagerten Deckels abdeckbar, der aus einem geeigneten Kunststoff bestehen kann. Dieser in Figur 1 mit 32 bezeichnete Deckel ist in der Abdecklage arretierbar.

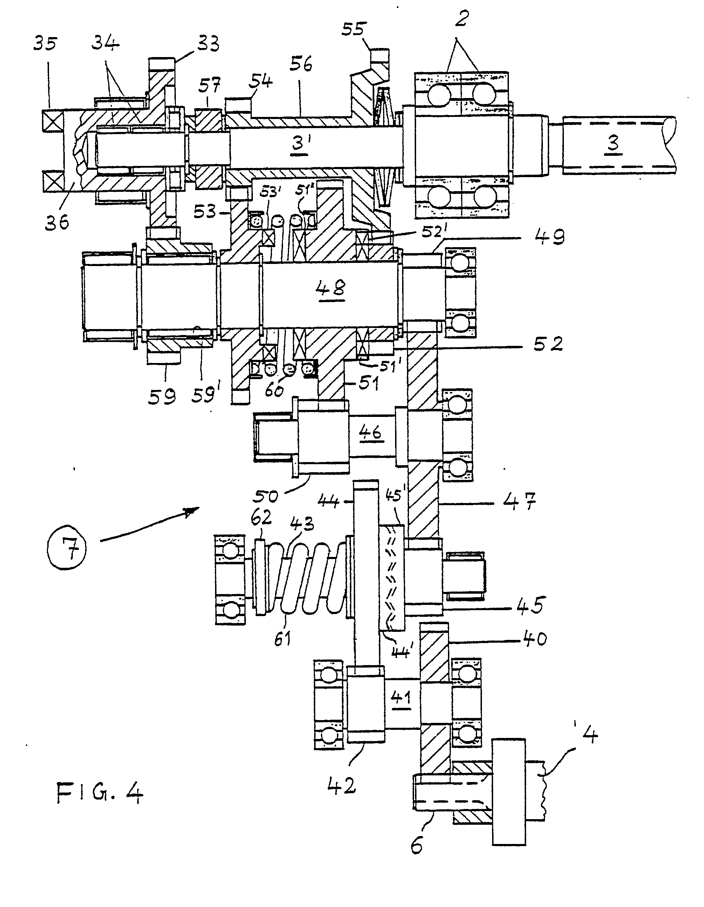

Die im Getriebegehäuse 1 untergebrachte Getriebeeinheit 7 ist in Figur 4 in einer Ebene liegend dargestellt. Zum dosierten Zuführen der beiden Komponenten zum Mischer 26 bzw. zum Mischerkopf 26' wird beim Ausführungsbeispiel die Gewindespindel 3 bei eingeschaltetem Antriebsmotor über die Getriebeeinheit 7 in Linksdrehung versetzt. Dadurch bewegt sich das Schlittenteil 8 von der in Fig. 2 unten dargestellten Ausgangslage in Pfeilrichtung nach vorne. Der mit dem Schlittenteil vereinigte Träger 10 nimmt somit die beiden Ausstoßkolbenstangen 11 und 12 mit, deren Ausstoßkolben 22 und 23 auf den verschiebbaren Kartuschenboden einwirken und den Inhalt der jeweiligen Kartusche gleichmäßig fortschreitend über die Zuleitungen 24 und 25 in den Mischer 26 pressen. Der Antrieb des Mischers 26 erfolgt durch das Spindelzahnrad 33, das mittels Nadellager 34 auf einem Zapfen 3' der Gewindespindel 3 drehbar gelagert ist und eine mit Klauen 35 versehene Hohlnabe 36 enthält. Die Klauen 35 kommen in Eingriff mit korrespondierenden Ausnehmungen 37 am Mischer 26, so daß dieser mit einer Drehzahl entsprechend der gewählten Untersetzung umläuft.

Das von Ritzel 6 der Ankerwelle 5 des Antriebsmotors angetriebene Zahnrad 40 treibt die Vorgelegewelle 41 an, auf der ein weiteres Zahnrad 42 angebracht ist, das mit einem die Vorgelegewelle 43 in Drehung versetzenden Zahnrad 44 Kämmt. Das Zahnrad 44 steht unter der Wirkung einer Schraubenfeder 61 welche mittels einer Haltescheibe 62 auf der Vorgelegewelle vorgespannt ist. Es ist ferner mit einem Rastenkranz 44' versehen, der mit einem Rastenkranz 45' eines weiteren, auf der Vorgelegewelle 43 angeordneten Zahnrads 45 zusammenwirkt. Beim Überschreiten eines bestimmten Grenzdrehmoments bleibt die Vorgelegewelle 43 stehen. Das Zahnrad 45 steht im Eingriff mit einem eine weitere Vorgelegewelle 46 antreibenden Zahnrad 47, das mit einem fest auf einer Vorgelegewelle 48 angebrachten Zahnrad 49 im Eingriff steht. Auf der Vorgelegewelle 46 sitzt außer dem Zahnrad 47 ein weiteres Zahnrad 50, das drehbar und axial verschiebbar auf der Vorgelegewelle 48 angeordnetes Kupplungszahnrad 51 antreibt. Das Kupplungszahnrad 51 besitzt an jeder Stirnseite einen Rastenkranz. Diese Rastenkränze sind mit 51' und 51" bezeichnet. Der eine Rastenkranz, 51', korrespondiert dabei mit einem an der Stirnseite eines auf der Vorgelegewelle 48 befindlichen Zahnrads 52 angebrachten Gegenrastenkranz 52'. Der andere Rastenkranz 51" wirkt hingegen mit einem an der Stirnseite eines ebenfalls auf der Vorgelegewelle 48 vorgesehenen Zahnrads 53 angebrachten Rastenkranz 53' zusammen, das frei drehbar auf der Vorgelegewelle 48 angebracht ist. Das Kupplungszahnrad 51 wird mittels einer Feder 60 in seiner Einrastlage für den Arbeitsgang gehalten.

Den beiden Zahnrädern 52 und 53 sind zwei Zahnräder 54 und 55 zugeordnet, die Bestandteil einer auf dem Zapfen 3' der Gewindespindel 3 angeordneten Hülse 56 sind und von denen das eine, 54, einen kleineren Durchmesser besitzt. Die aus dem Zahnrad 54, der Hülse 56 und dem Zahnrad 55 bestehende Einheit ist mittels einer Scheibe 57 mit der Gewindespindel 3 gekuppelt und steht unter der Axialkraft einer Tellerfeder 58. Die Scheibe 57 ist als Rastenscheibe ausgebildet, deren Rasten beim Überschreiten eines bestimmten Drehmoments von den korrespondierenden Gegenrasten an der Stirnfläche der Hülse 56 überrastet werden, so daß sich die Hülse 56 mit den beiden Zahnrädern 54 und 55 relativ zur Gewindespindel 3 dreht und diese stehen bleibt.

Das Spindelzahnrad 33 für den Antrieb des Mischers 26 wird durch ein ebenfalls auf der Vorgelegewelle 48 angeordnetes Zahnrad 59 in Drehung versetzt. Dieses Zahnrad enthält einen Freilauf 59', der eine Drehung des Spindelzahnrads 33 und damit des Mischers 26 in der Arbeitsdrehrichtung der Gewindespindel 3 zuläßt, in der anderen Drehrichtung der Gewindespindel hingegen nicht.

Der Rücklauf des Schlittenteils 8 und mit diesem der Rücklauf der Ausstoßkolben erfolgt zweckmäßigerweise mit einer höheren Geschwindigkeit, also gewissermaßen im Eilgang. Zu diesem Zweck ist ein zweiter Getriebeteil vorgesehen, der beim Umschalten des Antriebsmotors 5 auf die andere Drehrichtung (z.B. von Linkslauf auf Rechtslauf) aktiviert wird und dessen Gesamtuntersetzung deutlich niedriger ist, als diejenige für den Arbeitsvorgang. Dementsprechend rasch geht dann der Rücklauf des Schlittens 8 mit den Ausstoßkolben vonstatten.

Beim besagten Umschalten des Antriebsmotors wird das Kupplungszahnrad 51 mittels eines beim Umschalten des Antriebsmotors automatisch aktivierten oder von außen zu betätigenden Stellglieds gegen die durch die Feder 60 bewirkte Rückstellkraft auf der Vorgelegewelle 48 gegen den Mischerkopf 26' hin verschoben. Dadurch kommt der Rastenkranz 51" des Kupplungszahnrads 51 in Eingriff mit dem korrespondierenden Rastenkranz 53' des Zahnrads 53. Zugleich wird die mechanische Kupplung zwischen den Rastenkränzen 52' des Zahnrads 52 und dem korrespondierenden Rastenkranz 51' des Kupplungszahnrads 51 aufgehoben. Sämtliche Rastenkränze sind sägezahnförmig gestaltet, damit sie ihre Funktion nur in der vorgesehenen Drehrichtung erfüllen.

Das frei auf der Vorgelegewelle 48 angeordnete, mit dem Zahnrad 54 kämmende Zahnrad 53 ist damit über das Kupplungszahnrad 51 mit dem fest auf der Vorgelegewelle 46 sitzenden Zahnrad 50 und über dieses wiederum mit der Vorgelegewelle 46 gekuppelt. Daher wird die Gewindespindel 3 in umgekehrter Drehrichtung und mit einer höheren Drehzahl angetrieben. Die Rücklauf- bzw. Eilgangsdrehzahl ist dabei in Grenzen frei wählbar. Sie kann beispielsweise zwei bis dreimal so hoch sein wie die Arbeitsdrehzahl.

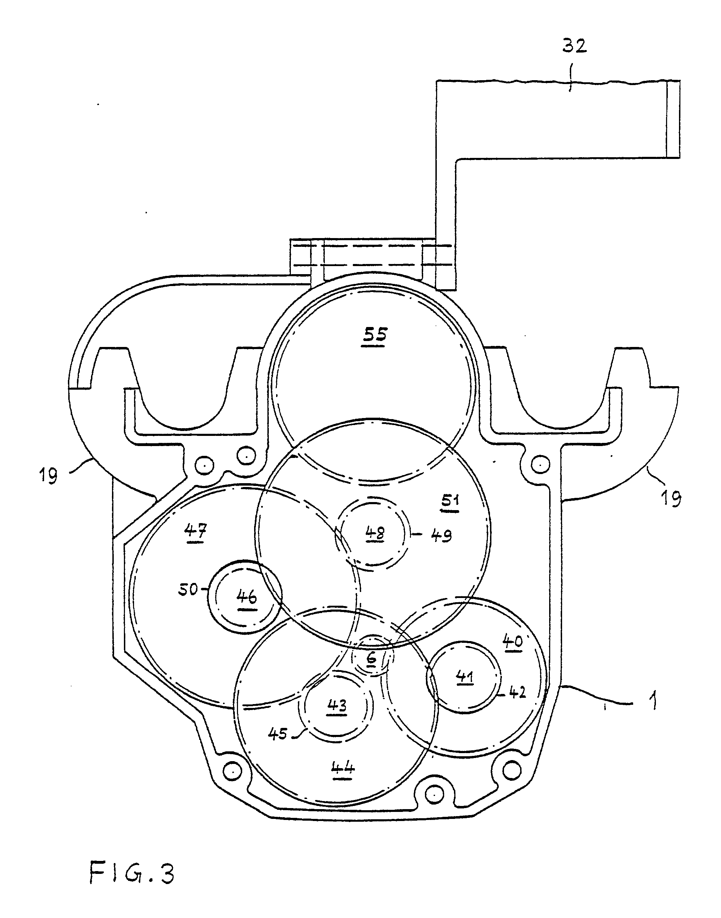

In Figur 3 ist die tatsächliche Anordnung der Getriebeeinheit veranschaulicht. Dabei sind die entsprechenden Zahnräder, soweit erkennbar, mit denselben Bezugszeichen versehen wie in Figur 4. Des weiteren sind aus dieser Ansicht die Aufnahmetaschen 19 für die beiden Kartuschen ersichtlich, desgleichen die Schwenklagerung des Deckels 32.

Der Deckel 32 ist zweiteilig ausgebildet, wobei der zweite Teil 32′ zur Vornahme der Arretierung in der geschlossenen Lage des Deckels sowie zur Entriegelung axial verschiebbar geführt ist. Diese Führung ist dadurch verwirklicht, daß seitlich am Deckelteil 32′ angebrachte Leisten am Getriebegehäuse 1 vorgesehene Rippen hintergreifen bzw. im Entriegelungsfall mit den Rippen außer Eingriff kommen.

Anstelle einer Stirnradgetriebeeinheit kann auch eine andere Getriebekonzeption ganz oder teilweise Anwendung finden, z.B. Schneckengetriebeeinheiten und/oder Planetengetriebeeinheiten.

Erforderlichenfalls können die Ausstoßkolben auch separat angetrieben werden und mit unterschiedlicher Geschwindigkeit bewegt werden.

Zum Aufhängen des Handwerkzeugs dient eine Öse 63.

Die Handlichkeit der Einrichtung ist durch die Verwendung eines herkömmlichen Elektrowerkzeugs, soweit es sich um den Motor- und Handgriffteil 64,65 handelt, gewährleistet. Die Bedienung erfolgt ebenfalls in der von Elektrowerkzeugen her bekannten Weise, mittels Schalterdrücker etc. Häufig ist auch die Verwendung eines batteriegespeisten Elektrowerkzeugs vorteilhaft.

Das mit der Misch- und Dosiereinrichtung ausgestattete Elektrowerkzeug eignet sich vor allem auch zum Einkleben von Autoscheiben mittels Zweikomponentenkleber, die hierfür wie auch für andere Zwecke geeignet sind.

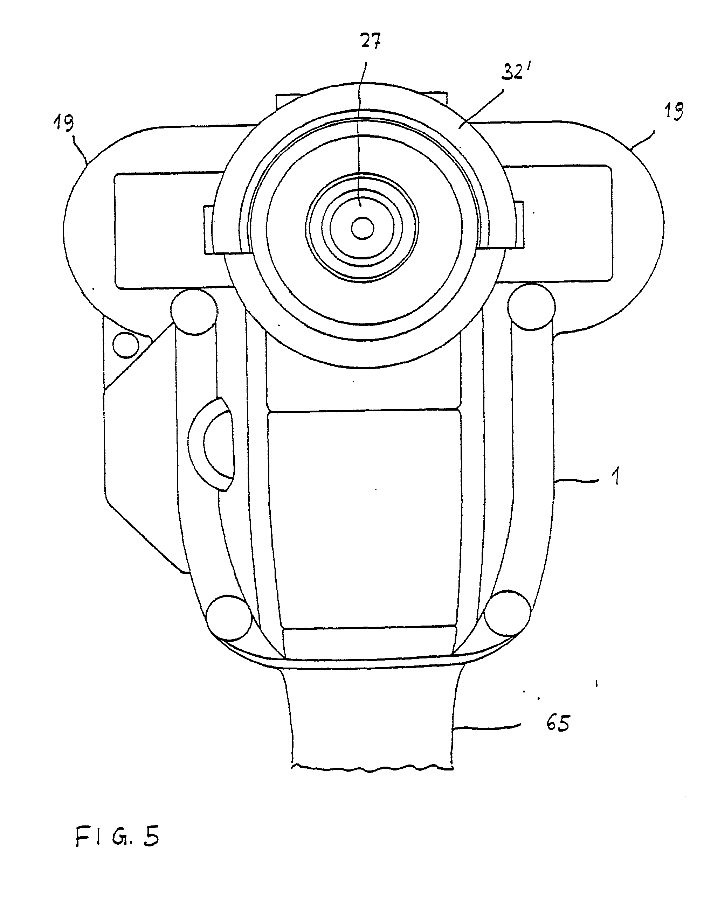

Die Kompaktform des Elektrowerkzeugs mit der Mischeinrichtung verdeutlicht besonders auch die Figur 5, in der gleiche Teile mit gleichen Bezugszeichen versehen sind.

**Patentansprüche**

1. Handgeführtes, motorisch angetriebenes Elektrowerkzeug, das mit einer Einrichtung zum Dosieren und Mischen von wenigstens zwei Substanzen sowie zum Zuführen der vermischten Substanzen zu einer Bearbeitungsstelle versehen ist, die mit Aufnahmetaschen für Kartuschen ausgerüstet ist, welche die miteinander zu vermischenden Substanzen enthalten, die jeweils mit Hilfe eines Auspreßglieds aus der betreffenden Kartusche herausdrückbar sind, wobei die Auspreßglieder durch ein über die Ankerwelle des Antriebsmotors angetriebenes Antriebselement betätigbar sind und jede der zu vermischenden Substanzen über eine Zuleitung zu einem Mischer gelangt, an dessen Ausgang eine Austrittsdüse für die Mischsubstanz anschließbar ist, dadurch gekennzeichnet, daß die Ankerwelle (4) des Antriebsmotors (5) zugleich den Antrieb des Mischers (26) bewirkt, in der Drehrichtung umkehrbar ist und das den Auspreßgliedern (22,23) zugeordnete Antriebselement (3) sowie den Mischer (26) über eine Getriebeeinheit (7) betätigt, die in einem mit dem Antriebsmotor (5) vereinigten Getriebegehäuse untergebracht ist.

2. Elektrowerkzeug nach Anspruch 1, dadurch gekennzeichnet, daß die Getriebeeinheit (7) einen Getriebeteil für die Arbeitsdrehzahl (Vorlauf) des Antriebselements (3), einen Getriebeteil für den Antrieb des Mischers (26) und einen Getriebeteil für die Rücklaufdrehzahl des Antriebselements (3) (Eilgang) enthält, wobei sowohl im Getriebeteil für den Vorlauf als auch in dem für den Rücklauf Sicherheitskupplungen gegen Drehmomentüberlastungen vorgesehen sind.

3. Elektrowerkzeug nach einem der vorhergehenden Ansprüche, dadurch gekennzeichnet, daß die Auspreßglieder (22,23) durch Ausstoßkolben verkörpert sind und das Antriebselement (3) als stationäre, im Getriebegehäuse (1) drehbar gelagerte Gewindespindel ausgebildet ist, der eine Spindelmutter (9) zugeordnet ist, die fest in einem hohlen Schlittenteil (8) untergebracht ist, an dem ein Träger (10) für jeden Ausstoßkolben angebracht ist.

4. Elektrowerkzeug nach den Ansprüchen 1 und 2, dadurch gekennzeichnet, daß am Getriebegehäuse (1) ein Längsholm (15) befestigt ist, der als Führung (16) für die Auspreßglieder (22,23) und die Gewindespindel (3) dient.

5. Elektrowerkzeug nach einem der vorhergehenden Ansprüche, dadurch gekennzeichnet, daß die Gewindespindel (3) und der Mischer (26) mit unterschiedlicher Drehzahl umlaufen.

6. Elektrowerkzeug nach einem der vorhergehenden Ansprüche, dadurch gekennzeichnet, daß die Dosier- und Mischeinrichtung für zwei Kartuschen (20,21) ausgelegt ist und für jede Kartusche zwei Aufnahmetaschen (18,19) vorgesehen sind, von denen die eine , (18) , an der Führung (16) und die andere (19) , am Getriebegehäuse (1) angeordnet ist, und daß die Kartuschen (20,21) und der Mischer mit Mischerkopf (26, 26′) einschließlich der Mischerkopfzuleitungen (24,25) durch einen aufklappbaren Deckel (32) abdeckbar sind, der in seiner Abdecklage arretierbar ist.

7. Elektrowerkzeug nach den Ansprüchen 1 bis 6, dadurch gekennzeichnet, daß der Mischer mit Mischerkopf (26,26′), die Zuleitungen (24,25) zu den Kartuschen und die Kartuschen (20, 21) eine austauschbare Einheit bilden.

8. Elektrowerkzeug nach Ansprüch 3, dadurch gekennzeichnet, daß die Stangen (11,12) der Ausstoßkolben (22,23) gelenkig im Träger (10) gelagert sind.

9. Elektrowerkzeug nach einem der vorhergehenden Ansprüche, dadurch gekennzeichnet, daß der Antriebsmotor (5) drehzahlregelbar und die Getriebeeinheit (7) durch Stirnradgetriebe verkörpert ist.

10. Elektrowerkzeug nach einem der vorhergehenden Ansprüche, dadurch gekennzeichnet, daß der Antriebsmotor (5) für Batteriebetrieb ausgelegt ist.

**Claims**

1. Electromotor powered handtool which is provided with an equipment for the metering and mixing of at least two substances as well as for the feeding of the intermixed substances to a treatment place, which equipment is equipped with receptacle pockets for cartridges which contain the substances to be intermixed together, which are each expressable from the cartridge concerned with the aid of a respective extruding member, wherein the extruding members are actuable through a drive element driven by way of the armature shaft of the drive motor and each of the substances to be intermixed gets by way of feed duct to a mixer, to the outlet of which an exit nozzle for the mixed substance is connectible, characterised thereby, that the armature shaft (4) of the drive motor (5) at the same time effects the drive of the mixer (26), which is reversible in direction of rotation, and actuates the drive element (3) associated with the extruding members (22, 23) as well as the mixer (26) by way of a gear unit (7), which is housed in a gear housing united with the drive motor (5).

2. Handtool according to claim 1, characterised thereby, that the gear unit (7) contains a gear part for the operating rotational speed (forward running) of the drive element (3), a gear part for the drive of the mixer head (26) and a gear part for the reverse rotational speed of the drive element (3) (rapid motion), wherein safety clutches to protect against torque overloads are provided in the gear part for the forward running as well as that for the reverse running.

3. Handtool according to one of the preceding claims, characterised thereby, that the extruding members (22, 23) are embodied by ejector pistons and the drive element (3) is constructed as stationary threaded spindle, which is rotatably borne in the gear housing (1) and associated with a spindle nut (9), which is fixedly housed in a hollow carriage part (8), at which a carrier (10) for each ejector piston is mounted.

4. Handtool according to the claims 1 and 2, characterised thereby, that a longitudinal strut (15), which serves as guide (16) for the extruding members (22, 23) and the threaded spindle (3), is fastened at the gear housing (1).

5. Handtool according to one of the preceding claims, characterised thereby, that the mixer (26) and the threaded spindle (3) rotate at different rotational speed.

6. Handtool according to one of the preceding claims, characterised thereby, that the metering and mixing equipment is designed for two cartridges (20, 21) and two receptacle pockets (18, 19), of which the one (18) is arranged at the guide (16) and the other (19) at the gear housing (1), are provided for each cartridge and that the cartridges (20, 21) and the mixer with mixer head (26, 26') inclusive of the mixer head feed ducts (24, 25) are coverable by a lid (32), which is tiltable up and arrestable in its covering position.

7. Handtool according to the claims 1 to 6, characterised thereby, that the mixer with mixer head (26, 26'), the feed ducts (24, 25) to the cartridges and the cartridges (20, 21) form an exchangeable unit.

8. Handtool according to claim 3, characterised thereby, that the rods (11, 12) of the ejector pistons (22, 23) are articulatedly borne in the carrier (10).

9. Handtool according to one of the preceding claims, characterised thereby, that the drive motor (5) is regulable in its rotational speed and the gear unit (7) is embodied by spur wheel gears.

10. Handtool according to one of the preceding claims, characterised thereby, that the drive motor (5) is designed for battery operation.

## Revendications

1. Outil à main à moteur électrique muni d'une installation pour le dosage et le mélange d'au moins deux substances, ainsi que pour amener les substances mélangées à un lieu de mise en œuvre, équipé de poches de réception des cartouches contenant les substances à mélanger entre elles, que l'on peut extraire chacune de la cartouche correspondante au moyen d'un organe éjecteur, étant entendu que l'organe éjecteur peut être actionné au moyen d'un organe d'entraînement entraîné par l'arbre d'induit du moteur d'entraînement et que chacune des substances à mélanger arrive, par l'intermédiaire d'une conduite, à un mélangeur, à la sortie duquel peut être raccordée une buse de sortie pour la substance à mélanger, caractérisé en ce que l'arbre d'induit (4) du moteur d'entraînement (5) qui actionne en même temps l'entraînement du mélangeur (26), peut changer de sens de rotation et actionne, par l'intermédiaire d'un ensemble réducteur (7), l'organe d'entraînement (3) associé aux organes éjecteurs (22, 23), ainsi que le mélangeur (26), ensemble réducteur qui est disposé dans un carter de réducteur commun avec le moteur d'entraînement (5).

2. Outil électrique suivant la revendication 1, caractérisé en ce que l'ensemble réducteur (7) comporte une partie de réducteur pour la vitesse de rotation de travail (marche avant) de l'organe d'entraînement (3), une partie de réducteur pour l'entraînement du mélangeur (26) et une partie de réducteur pour la vitesse de rotation en marche arrière (vitesse rapide) de l'organe d'entraînement (3), étant entendu qu'aussi bien dans la partie de réducteur pour la marche avant que dans la partie du réducteur pour la marche arrière, des accouplements de sécurité sont prévus contre des surcharges du couple de rotation.

3. Outil électrique suivant l'une quelconque des revendications précédentes, caractérisé en ce que les organes éjecteurs (22, 23) sont matérialisés par des pistons éjecteurs et que l'organe d'entraînement (3) est réalisé sous la forme d'une broche filetée stationnaire, montée tournante dans le carter réducteur (1), broche filetée qui est associée à un écrou fileté (9) installé de façon fixe dans une pièce creuse formant glissière (8), à laquelle est associé un support (10) pour chacun des pistons éjecteurs.

4. Outil électrique suivant les revendications 1 et 2, caractérisé en ce que, sur le carter réducteur (1), est fixé un longeron (15) servant de guidage (16) pour les organes éjecteurs (22, 23) et la broche filetée (3).

5. Outil électrique suivant l'une des revendications précédentes, caractérisé en ce que la broche filetée (3) et le mélangeur (26) tournent avec des vitesses de rotation différentes.

6. Outil électrique suivant l'une des revendications précédentes, caractérisé en ce que l'installation pour le dosage et le mélange est prévue pour deux cartouches (20, 21) et que, pour chaque cartouche, sont prévues deux poches de réception (18, 19), dont l'une, (18), est disposée sur le guidage (16), et l'autre, (19), sur le carter réducteur (1), et en ce que les cartouches (20, 21) et le mélangeur, avec la tête de mélangeur (26, 26'), y compris les conduites d'arrivée (24, 25) à la tête de mélangeur, peuvent être recouverts au moyen d'un couvercle (32) rabattable, que l'on peut bloquer en position de fermeture.

7. Outil électrique suivant l'une des revendications 1 à 6, caractérisé en ce que le mélangeur, avec la tête de mélangeur (26, 26'), les conduites d'arrivée (24, 25) aux cartouches et les cartouches (20, 21) forment un ensemble interchangeable.

8. Outil électrique suivant la revendication 3, caractérisé en ce que les tiges (11, 12) des pistons éjecteurs (22, 23) sont montées à articulation dans le support (10).

9. Outil électrique suivant l'une des revendications précédentes, caractérisé en ce que la vitesse de rotation du moteur d'entraînement (5) est réglable et que l'ensemble réducteur (7) est réalisé en réducteur à pignons droits.

10. Outil électrique suivant l'une des revendications précédentes, caractérisé en ce que le moteur d'entraînement (5) est réalisé pour le fonctionnement sur batterie.

FIG.1

FIG.2

FIG.3

FIG. 4

FIG. 5